# EUROPÄISCHE PATENTANMELDUNG

(11) **EP 0 982 200 A1**
(43) Veröffentlichungstag der Anmeldung: **01.03.2000**
(21) Anmeldenummer: 99115447.7
(22) Anmeldetag: 05.08.1999
(51) Int. Cl.: B60R 25/00, B60R 21/16, B60R 16/02

(54) **Insassenschutzsystem für Kraftfahrzeuge sowie Verfahren zur Diebstahlsicherung dieser Insassenschutzeinrichtung**

(30) Priorität: 27.08.1998 DE 19838900
(71) Anmelder: DaimlerChrysler AG, 70567 Stuttgart (DE)
(72) Erfinder: Fendt, Günter, 86529 Schrobenhausen (DE); Bischoff, Michael, 85111 Adelschlag (DE); Schultz-Naumann, Carl-Wilhelm, 85229 Markt Indersdorf (DE)
(74) Vertreter: Kolb, Georg

(57) **Zusammenfassung**

Bisher wurden Insassenschutzsysteme als im Fahrzeug verdeckt eingebaute Baugruppe, die zudem nicht ohne weiteres ein- oder ausgebaut werden kann, als nicht diebstahlgefährdet bzw. als vom Diebstahlschutz des Gesamtfahrzeugs geschützt betrachtet. Aufgrund jedoch zunehmender Diebstahlhäufigkeit von Insassenschutzeinrichtungen als teure Einzelteile, insbesondere als Ersatz für ausgelöste Insassenschutzeinrichtungen mit pyrotechnischen Zündern, ist ein Diebstahlschutz erforderlich.

Dazu wird in allen Insassenschutzeinrichtungen (3) sowie vorzugsweise auch in der Steuereinheit (1) eine elektronisch auslesbare Kennung gespeichert, die Kennungen der Insassenschutzeinrichtungen miteinander bzw. mit der in der Steuereinheit verglichen und bei Nichtübereinstimmung automatisch ein Diebstahlsignal bzw. Maßnahmen zur Meldung der Nichtübereinstimmung oder/und Maßnahmen zur Deaktivierung der Insassenschutzeinrichtungen (3) durchgeführt. So werden die nicht übereinstimmenden Insassenschutzeinrichtungen (3) in ein Fehlerregister eingetragen, eine Fehlerlampe (6) gesetzt und bei einer Diagnose mittels eines an die Steuereinheit anschließbaren Diagnosegerätes die jeweiligen Insassenschutzeinrichtungen (3) als unzulässig gemeldet.

## Beschreibung

Die Erfindung betrifft ein Isassenschutzsystem für Kraftfahrzeuge sowie ein Verfahren zur Diebstahlsicherung dieser Insassenschutzeinrichtungen.

Verfahren und Vorrichtungen zur Diebstahlsicherung von ganzen Fahrzeugen sind beispielsweise in Form der Motor- oder Rahmennummer bspw. auch aus der DE 195 08 693 A1, DE 42 01 894 A1 oder DE 196 07 294 A1 in Form von optisch oder elektronisch ablesbaren Fahrzeugidentifizierungssystemen bekannt.

Zunehmend werden jedoch neben Fahrzeugen auch gezielt Reifen und Felgen, also am Fahrzeug von außen montierte Baugruppen, entwendet und durch Markierungen optisch erkennbar markiert, wie der DE-GM 89 08 785 entnommen werden kann.

Des weiteren sind beispielsweise auch aus der DE 36 37 960 C1 Diebstahlwarnanlagen für Zusatzgeräte, insbesondere Autoradios bekannt, bei denen die Zusatzgeräte der Fahrer nur durch Eingabe eines Codes die Zusatzgeräte aktivieren kann und beim Abschalten der Energieversorgung, meist über das Zündschloß, oder durch direkte Sperrung durch den Fahrer des Fahrzeugs die Zusatzgeräte ohne Code gesperrt sind. Dies ist jedoch für den Diebstahlschutz von Insassenschutzeinrichtungen ungeeignet, weil insassenschutzeinrichtungen nach dem Einbau für die Eingabe eines Codes schlecht zugänglich sind, eine große Anzahl von Insassenschutzeinrichtungen vorgesehen ist und insbesondere die häufige Aktivierung und Deaktivierung kritisch und entsprechende entschlüsselungssichere Codierverfahren äußerst aufwendig sind. Zudem ist bei diesen Zusatzgeräten zwar der Einbau in ein anderes Fahrzeug unterbunden, nicht jedoch der Einbau eines neuen Zusatzgeräts anstelle des bisherigen.

Insassenschutzsysteme werden bisher als fester Bestandteil des Fahrzeuges betrachtet. Sie sind verdeckt eingebaut und nur mit besonderen Kenntnissen und Spezialwerkzeugen ein- und ausbaubar. Aus diesem Grunde wurden sie durch den Diebstahlschutz des Gesamtfahrzeuges als ausreichend geschützt betrachtet.

Neuste Diebstahlstatistiken zeigen jedoch, daß auch Insassenschutzeinrichtungen von besonderem Interesse für Diebe sind, da diese meist pyrotechnische Zünder aufweisen und ein Austausch einer ausgelösten Insassenschutzeinrichtung recht teuer ist. Optische Markierungen auf Insassenschutzeinrichtungen scheiden jedoch aus, da diese im eingebauten Zustand im Fahrzeug nicht einsehbar sind. Aufgabe der Erfindung ist es daher, ein diebstahlgesichertes Insassenschutzsystem sowie ein einfaches und zugleich wirkungsvolles Verfahren zur Diebstahlsicherung von Insassenschutzeinrichtungen anzugeben.

Diese Aufgabe wird durch die Merkmale der Hauptansprüche gelöst. Vorteilhafte Weiterbildungen der Erfindung sind den Unteransprüchen zu entnehmen.

Indem jede Insassenschutzeinrichtung mit einer identifizierbaren Kennung versehen wird, kann ein Diebstahl nachgewiesen und so mögliche Täter abgeschreckt werden. Die Kennung ist dabei identifizierbar, also einer speziellen Insassenschutzeinrichtung, einem Fahrzeug oder Fahrzeughalter oder ähnlichem zuordenbar. Insbesondere bietet sich eine fahrzeugindividuelle Kennung vergleichbar oder identisch der Fahrgestellnummer an.

Von wesentlicher Bedeutung ist die Abspeicherung der Kennung in den Insassenschutzeinrichtungen , vorzugsweise auch in einem Speicher der Steuereinheit der Insassenschutzeinrichtungen.

Diese erweist sich gegenüber einer rein äußerlichen, optisch wahrnehmbaren Anbringung der Kennung zunächst als deutlich sicherer, da diese nicht ohne weiteres beseitigt oder geändert werden kann. Die abgespeicherte Kennung kann zudem ausgelesen, nicht jedoch überschrieben werden. Durch die Speicherung wird es möglich, jederzeit, bspw. bei jeder Inbetriebnahme des Fahrzeugs, und automatisch die überwachung der Kennungen aller im Fahrzeug installierten Insassenschutzeinrichtungen durchzuführen.

Dadurch wiederum ergibt sich der besondere Vorteil, daß automatisch Maßnahmen zur Meldung einer Nichtübereinstimmung oder/und Maßnahmen zur Deaktivierung der Insassenschutzeinrichtungen durchgeführt werden können.

Als eine Maßnahme zur Meldung der Nichtübereinstimmung wird die Eintragung der Nichtübereinstimmung allgemein oder der nicht übereinstimmenden Insassenschutzeinrichtungen in ein Fehlerregister der Steuereinheit vorgeschlagen. Dort kann es dann beim Werkstattservice ausgelesen werden. Durch das Setzen einer den Ausfall einer der Insassenschutzeinrichtungen anzeigenden Fehlerlampe als Meldung der Nichtübereinstimmung kann in besonders geeigneter Weise eine passive, auf der Abschreckung basierende Schutzfunktion für die Insassenschutzeinrichtungen ausgeübt werden, da einerseits eine solche Fehlerlampe üblicherweise bereits vorhanden ist und somit keine zusätzlichen Kosten verursacht. Andererseits kann der Fahrer nicht unterscheiden, ob nun eine seiner Insassenschutzeinrichtungen ausgefallen ist oder durch unzulässigen Einbau die Fehlerlampe brennt, so daß er verunsichert und dem unzu-lassigen Einbau nicht zustimmen wird.

Bei einer Diagnose mittels eines Fehlerdiagnosegerätes, wie es den autorisierten Werkstätten bereits heute zur Fehlererkennung von Insassenschutzeinrichtungen zur Verfügung steht, könnten diejenigen Insassenschutzeinrichtungen als unzulässig eingebaut meldet werden, deren Kennung mit der- bzw. denjenigen in der Steuereinheit nicht übereinstimmt, bspw. auch durch Auslesen des Fehlerregisters. Indem die Werkstatt oder andere mit einem solchen Diagnosegerät ausgestattete Behörden diesen unzulässigen Einbau erkennen können, sind diese gehalten, diesen Verdacht zu Staatsanwaltschaft und Autoherstellern melden.

Der bloße Einsatz dieser relativ einfachen Meldemaßnahmen dürfte bereits ausreichen, um Diebe abzuschrecken und einen ausreichenden Schutz zu erreichen.

Zudem können komplexere Maßnahmen der Meldung eines Diebstahls, wie sie für Fahrzeuge durch globale Satellitenortung, Funkdatenübertragung oder ähnliches eröffnet werden, auch hinsichtlich eines Diebstahls der Insassenschutzeinrichtungen ergänzt werden.

In ganz besonderer Weise kann die Abspeicherung einer Kennung im Speicher der Steuereinheit sowie in den Insassenschutzeinrichtungen auch dazu eingesetzt werden, um die Deaktivierung einzelner oder aller Insassenschutzeinrichtungen durchzuführen.

So werden vorzugsweise nur diejenigen Insassenschutzeinrichtungen ausgelöst, diejenige Kennung aufweisen, die auch in der Steuereinheit abgelegt ist. Die Steuereinheit wird also unzulässig eingebaute Insassenschutzeinrichtungen nicht auslösen.

Darüber hinaus können vorzugsweise die mit einer Kennung versehenen Insassenschutzeinrichtungen nicht mehr von Steuereinheit ohne diese Kennung ausgelöst werden, d.h. mit einer Kennung gesicherte Insassenschutzeinrichtungen nicht in andere Fahrzeuge eingebaut werden. Zusätzlich kann auch noch eine Kennung für offiziell nachgerüstete Ersatzteile berücksichtigt werden, um eine individuelle Programmierung der Ersatzteile entsprechend der jeweiligen Kennung in der Steuereinheit zu vermeiden.

Falls Fahrzeughersteller Bedenken gegen die Zulässigkeit einer solchen Deaktivierung im Hinblick auf die Produkthaftung haben, sollte diese Deaktivierung inaktiviert werden können, d.h. es würden zwar die Maßnahmen der Meldung der Nichtübereinstimmung durchgeführt, nicht jedoch die Auslösung der Insassenschutzeinrichtungen eingeschränkt. Allein die Kenntnis der entsprechenden Fachkreise, daß eine solche Deaktivierung tatsächlich möglich ist, dürfte eine ausreichende Schutzwirkung erzielen, insbesondere in Kombination mit den Maßnahmen der Meldung der Nichtübereinstimmung.

Die Erfindung wird nachfolgend anhand von Ausführungsbeispielen und Figuren näher erläutert. Kurze Beschreibung der Figuren:
- Figur 1: ein Bussystem mit Insassenschutzeinrichtungen und einer Steuereinheit mit eigener Kennung
- Figur 2: ein Bussystem mit Insassenschutzeinrichtungen und einer Steuereinheit ohne eigene Kennung

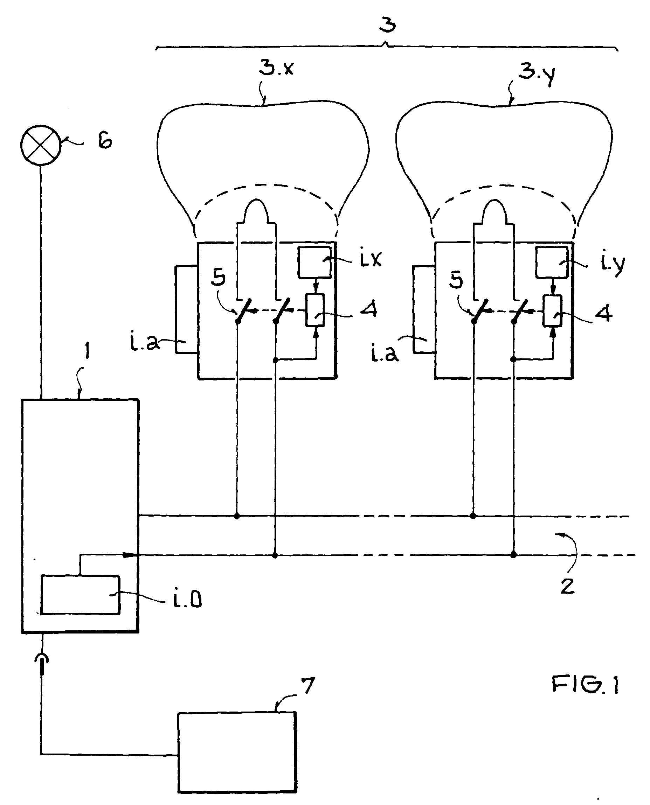

Die Figur 1 zeigt ein Bussystem 2 über welches eine Steuereinheit 1 mit einer Anzahl von Insassenschutzeinrichtungen verbunden ist, von denen beispielhaft die Insassenschutzeinrichtungen 3.x und 3.y als Airbags skizzenhaft dargestellt sind. Die Figur ist symbolisch und beinhaltet nicht alle Details.

Die Insassenschutzeinrichtungen 3 werden über das Bussystem 2 von der Steuereinheit 1 gesteuert, also zyklisch auf Funktionsfähigkeit geprüft, mit aktuellen Steuerungsparametern versorgt und gegebenenfalls auch aktiviert, indem die Auslöseschalter 5 in den einzelnen Insassenschutzeinrichtungen 3 geschlossen werden. Werden Fehler bei der zyklischen Prüfung auf Funktionsfähigkeit entdeckt, wird eine Fehlerlampe 6 aktiviert oder erlischt nicht, nachdem nach dem Einschalten des Fahrzeugs die Steuereinheit 1 die Funktionsprüfung durchgeführt hat. Mittels eines Diagnosegerätes 7 können die Zustände von Steuereinheit 1 und Insassenschutzsystemen 3 erfaßt werden.

Zum Diebstahlschutz weist jede Insassenschutzeinrichtung 3 zunächst eine äußere identifizierbare Kennung i.a auf, beispielsweise die Fahrgestellnummer. Diese dient äußerlichen Kenntlichmachung des Diebstahlschutzes und damit primär zur Abschreckung.

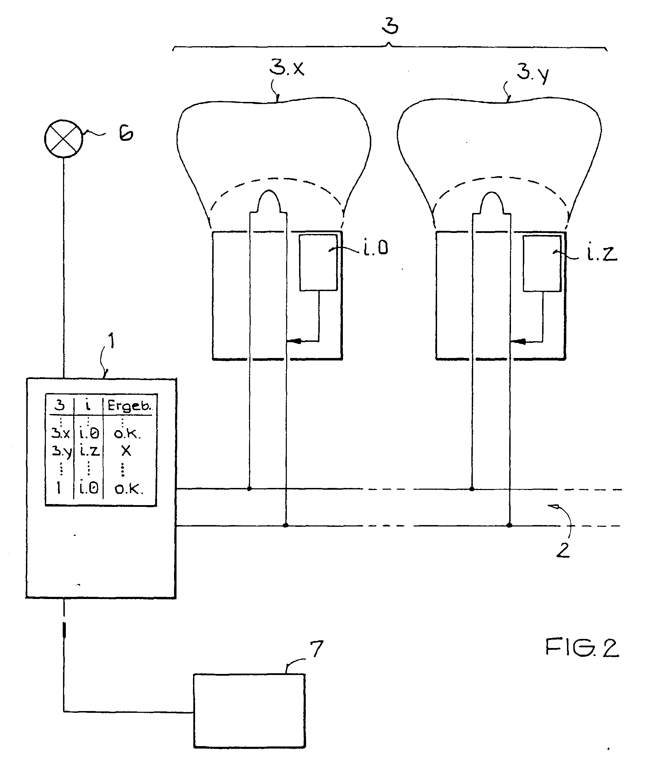

Zusätzlich ist in jeder Insassenschutzeinrichtung 3.x/3.y eine innere identifizierbare Kennung i.x/i.y abgespeichert, die gleich oder zumindest einen gleichen Teil mit einer in der Steuereinheit 1 abgespeicherten Kennung i.0 aufweist. Die abgespeicherte Kennung i.x/i.y vergleicht in diesem Ausführungsbeispiel jeweils ein Vergleicher 4, der in diesem Ausführungsbeispiel separat in jeder Insassenschutzeinrichtung 3 vorgesehen ist, grundsätzlich aber auch in der Steuereinheit 1 angeordnet sein kann, untereinander und/oder mit einer in der Steuereinheit 1 abgespeicherten Kennung i.0. Stimmen diese mit einer vorgegebenen Bedingung, im einfachsten Fall vollständig oder beispielsweise ein bestimmter Teil der Kennungen überein, so können diese Insassenschutzeinrichtungen ausgelöst werden. Die Sperrung der Insassenschutzeinrichtungen kann durch Sperrung der Auslöseschalter 5 oder durch Nichtansteuerung der Insassenschutzeinrichtungen 3 über die Steuereinheit 1 erfolgen, wie dies in Figur 2 dargestellt ist. So werden nur diejenigen Insassenschutzeinrichtungen 3 ausgelöst, diejenige Kennung i.x,i.y aufweisen, die auch in der Steuereinheit 1 abgelegt ist. Die Steuereinheit 1 wird also unzulässig eingebaute Insassenschutzeinrichtungen 3 nicht auslösen.

Darüber hinaus können vorzugsweise die mit einer Kennung versehenen Insassenschutzeinrichtungen 3 nicht mehr von anderen Steuereinheiten ohne diese Kennung, bspw. in anderen Fahrzeugen ausgelöst werden, d.h. mit einer Kennung gesicherte Insassenschutzeinrichtungen nicht in andere Fahrzeuge eingebaut werden. Dazu können die Vergleicher 4 und Auslöserschalter 5 in den einzelnen Insassenschutzeinrichtungen 3 angeordnet werden, wobei auch eine softwaretechnische Löung denkbar ist, bei der die Insassenschutzeinrichtungen 3 die Kennung von der Steuereinheit 1 prüfen. zum Austausch defekter Steuereinheiten 1 kann eine Programmierung dieser vorgesehen werden. Zusätzlich kann auch noch eine Kennung für offiziell nachgerüstete Ersatzteile berücksichtigt werden, um eine individuelle Programmierung der Ersatzteile entsprechend der jeweiligen Kennung in der Steuereinheit zu vermeiden.

Die Nichtübereinstimmung durch einzelne Insassenschutzeinrichtungen wird dem Fahrer über die Fehlerlampe 6 für das Insassenschutzsystem mitgeteilt.

Figur 2 zeigt nun noch, daß für das Grundkonzept der Diebstahlsicherung nicht zwingend eine Ablage einer eigenen Kennung (i.0 in Fig. 1) in der Steuereinheit 1 erforderlich ist, wenn die einzelnen Insassenschutzeinrichtungen 3 der Steuereinheit 1 ihre abgespeicherte Kennung (i.x,i.y) nur übermitteln können bzw. die Steuereinheit 1 diese auslesen kann. Das Auslesen von verschiedenene Registern einer Insassenschutzeinrichtung 3 durch die Steuereinheit 1 ist jedoch für den Diagnosebetrieb bereits bekannt und ohne weiteres anwendbar. Die Kennungen i.O,i.z,... aller Insassenschutzeinrichtungen 3.x,3.y,... werden so bspw. von der Steuereinheit 1 elektronisch ausgelesen und miteinander verglichen, wobei in diesem Ausführungsbeispiel für dieses Fahrzeug standardmäßig die Kennung i.0 vorgesehen sei und die Insassenschutzeinrichtung 3.y eine unzulässig nachträglich ersetzte darstellt, deren Kennung mit i.z. entsprechend nicht übereinstimmt und somit zur Meldung bzw. Deaktivierung führt.

Bei Nichtübereinstimmung werden also automatisch Maßnahmen zur Meldung der Nichtübereinstimmung oder/und Maßnahmen zur Deaktivierung der Insassenschutzeinrichtungen 3.x,3.y,... durchgeführt werden. Dies kann in einfacher Weise bereits durch ein Fehlerregister durchgeführt werden, wie es in Figur 2 skizzenhaft angedeutet ist, in dem abweichende Insassenschutzeinrichtungen registriert werden. Selbstverständlich läßt sich ein solches Register auch anwenden, wenn, wie in Fig. 1, in der Steuereinheit 1 selbst ebenfalls eine Kennung abgespeichert ist.

Erkennt die Steuereinheit 1 durch Signale der in den Figuren nicht dargestellten Unfallsensoren einen Auslösefall, wäre es beispielsweise aus einem solchen Fehlerregister heraus möglich zu entscheiden, welche der Insassenschutzeinrichtungen ausgelöst werden und welche nicht. Die Sperrung der Auslösung kann also nicht nur in den Insassenschutzeinrichtungen erfolgen, wie in Figur 1 der Fall, sondern auch durch die Steuereinheit 1, die diejenigen Insassenschutzeinrichtungen mit nicht übereinstimmender Kennung nicht auslöst. Vorzugsweise wird dieses für den Fall eingesetzt, wenn, wie in Figur 1 in der Steuereinheit 1 eine Kennung abgelegt ist. Die Sperrung der Insassenschutzeinrichtungen 3 durch eigenen Vergleicher 4 und Auslöseschalter 5 ist also für den Fall, daß in der Steuereinheit 1 keine Kennung hinterlegt ist, besonders vorteilhaft.

Zudem kann ein an die Steuereinheit 1 anschließbares Diagnosegerät 7 aus dem Fehlerregister besonders einfach auslesen, welche Insassenschutzeinrichtungen unzulässig eingebaut wurden.

## Patentansprüche

1. Insassenschutzsystem für Kraftfahrzeuge, bestehend aus einer Anzahl von Insassenschutzeinrichtungen (3.x,3.y,...), die untereinander und/oder mit einer zur Auslösung der Insassenschutzeinrichtungen dienenden Steuereinheit (1) zum Datenaustausch kommunikationsfähig miteinander verbunden sind, **dadurch gekennzeichnet, daß** jede Insassenschutzeinrichtung (3.x,3.y,...) eine Kennung (i.a,i.x,i.y,...) zu deren Schutz vor Diebstahl aufweist.

2. Insassenschutzeinrichtung nach Anspruch 1, **dadurch gekennzeichnet**, daß die Kennung (i.x,i.y,...) jeweils in einem Speicher der Insassenschutzeinrichtung (3.x,3.y,...) abgelegt ist, die Kennungen aller Insassenschutzeinrichtungen elektronisch ausgelesen und miteinander verglichen werden und bei Nichtübereinstimmung ein Diebstahlsignal gesetzt wird.

3. Insassenschutzeinrichtung nach Anspruch 2, **dadurch gekennzeichnet, daß** in einem Speicher der Steuereinheit (1) der Insassenschutzeinrichtungen (3.x,3.y,...) ebenfalls zumindest eine Kennung (i.0,...) abgespeichert ist, mit der die Kennungen (i.x,i.y,...) aller Insassenschutzeinrichtungen (3.x,3.y,...) verglichen werden.

4. Verfahren zur Diebstahlsicherung von Insassenschutzeinrichtungen (3.x,3.y,...), insbesondere für Kraftfahrzeuge, die mit einer Steuereinheit (1) ausgelöst werden, **bei dem**
a) jede Insassenschutzeinrichtung (3.x,3.y,...) mit einer Kennung (i.a,i.x,i.y,...) versehen wird,
b) die Kennungen (i.x,i.y,...) aller Insassenschutzeinrichtungen (3.x,3.y,...) elektronisch ausgelesen und miteinander verglichen werden und
c) bei Nichtübereinstimmung automatisch Maßnahmen zur Meldung der Nichtübereinstimmung oder/und Maßnahmen zur Deaktivierung der Insassenschutzeinrichtungen (3.x,3.y,...) durchgeführt werden.

5. Verfahren nach Anspruch 4, **wobei**
a) in einem Speicher der Steuereinheit (1) der Insassenschutzeinrichtungen (3.x,3.y,...) ebenfalls zumindest eine Kennung (i.0,...) abgespeichert wird,
b) die Kennungen (i.x,i.y,...) aller Insassenschutzeinrichtungen (3.x,3.y,...) und diejenige(n) (i.0 im Speicher elektronisch ausgelesen und miteinander verglichen werden.

6. Verfahren nach Anspruch 4 oder 5, **wobei** die Steuereinheit (1) die Kennungen der Insassenschutzeinrichtungen (3.x,3.y,...) ausliest und bei Nichtübereinstimmung ein Fehlereintrag in einem Fehlerregister der Steuereinheit (1) erfolgt.

7. Verfahren nach einem der vorangehenden Ansprüche, **wobei** bei Nichtübereinstimmung eine den Ausfall einer der Insassenschutzeinrichtungen (3.x,3.y,...) anzeigende Fehlerlampe (6) gesetzt wird.

8. Verfahren nach einem der vorangehenden Ansprüche, **wobei** bei einer Diagnose mittels eines Fehlerdiagnosegerätes (7) diejenigen Insassenschutzeinrichtungen (3.x,3.y,...) als unzulässig eingebaut meldet werden, deren Kennung (i.x,i.y,...) mit der- bzw. denjenigen (i.0) in der Steuereinheit (1) nicht übereinstimmt.

9. Verfahren nach einem der vorangehenden Ansprüche, **wobei** von der Steuereinheit (1) nur diejenigen Insassenschutzeinrichtungen (3.x,3.y,...) auslöst werden, deren Kennung (i.x,i.y,...) mit der- bzw. denjenigen (i.0) in der Steuereinheit (1) übereinstimmt.

10. Verfahren nach einem der vorangehenden Ansprüche, **wobei** die mit der Kennung (i.x,i.y,...) versehenen Insassenschutzeinrichtungen (3.x,3.y,...) nur von derjenigen Steuereinheit ausgelöst werden können, deren Kennung (i.x,i.y,...) mit der- bzw. denjenigen (i.0) in der Steuereinheit (1) übereinstimmt.

11. Verfahren nach einem der Ansprüche 9 oder 10, **wobei** die Deaktivierung der Insassenschutzeinrichtungen (3.x,3.y,...) wiederum inaktiviert werden kann.

12. Verfahren nach einem der vorangehenden Ansprüche, **wobei** beim Einbau im Werk jede Insassenschutzeinrichtung (3.x,3.y,...) eines Fahrzeuges mit einer gleichen Kennung (i.x,i.y,...= i.0) versehen und in der Steuereinheit (1) entsprechend diese Kennung (i.0) abgespeichert wird, insbesondere die Fahrgestellnummer als Kennung verwendet wird.

13. Verfahren nach einem der vorangehenden Ansprüche, **wobei** die einmal abgespeicherte Kennung (i.0,i.x,i.y,...) nicht überschrieben werden kann.

14. Verfahren nach einem der vorangehenden Ansprüche, **wobei** eine Kennung als ein Ersatzteil vorgesehen ist und von jeder Steuereinheit (1) auch Insassenschutzeinrichtungen (3.x,3.y,...) ausgelöst werden können, die eine Kennung als ein Ersatzteil aufweisen.
